# EUROPEAN PATENT APPLICATION

(11) **EP 4 632 769 A1**
(43) Date of publication of application: **15.10.2025**
(21) Application number: 25170052.2
(22) Date of filing: 11.04.2025
(51) Int. Cl.: H01B 7/18, H01B 7/22

(54) **CABLE AND CHARGING DATA LINE**

(30) Priority: 12.04.2024 CN 202420762486 U
(71) Applicant: Anker Innovations Technology Co., Ltd., Changsha, Hunan 410000 (CN)
(72) Inventor: ZOU, Zhugang, Shenzhen (CN)
(74) Representative: Steffens, Adrian

(57) **Abstract**

Disclosed is a cable (10) and a charging data line. The cable (10) includes sub-cables including a conductive conductor part; and at least one reinforcing structure including a fiber part (201) that extends along an extending direction of the sub-cable and at least one metal part that spirally extends along the extending direction of the fiber part (201) and surrounds a periphery of the fiber part (201). By the above means, a risk of fatigue fracture of the conductor part (110) in the cable (10) can be reduced, and resistance to fatigue fracture of the cable (10) can be improved.

## Description

### Field

The present disclosure relates to the technical field of charging products, in particular to a cable and a charging data line.

### Background

With development of science and technology, various electronic devices emerge, which provide convenience for people's production and life. The electronic devices need cables to transmit current and electric signals. For example, a cable in a data line of a mobile phone can be used for charging and data transmission for the mobile phone.

Currently, the cables are often subjected to external forces such as pulling and bending during use, and thus are prone to fatigue fracture and cannot be used.

### Summary

A technical problem to be solved by the present disclosure is how to reduce a risk of fatigue fracture of a conductor part in a cable.

In order to solve the above technical problem, according to a first aspect of the disclosure, a cable is provided. The cable includes sub-cables including a conductive conductor part; and at least one reinforcing structure including a fiber part that extends along an extending direction of the sub-cable and at least one metal part that spirally extends along the extending direction of the fiber part and surrounds a periphery of the fiber part.

In order to solve the above technical problem, according to a second aspect of the disclosure, a charging data line is provided including said cable.

Beneficial effects of the disclosure are: different from the related art, the cable includes sub-cables including a conductive conductor part; and at least one reinforcing structure including a fiber part that extends along an extending direction of the sub-cable and at least one metal part that spirally extends along the extending direction of the fiber part and surrounds a periphery of the fiber part, which can reduce a risk of fatigue fracture of the conductor part and improve resistance to fatigue fracture of the cable. The fiber part has high tensile strength and can share the tensile stress on the conductor part when the cable is pulled or bent, and the tensile stress on the conductor part is small, which can increase the number of times that the conductor part can be subjected to pulling and bending and makes the conductor part not prone to tensile fracture. The metal part has a large deformation margin, is easily bent and deformed, and is subjected to a small shearing force when bent, which can reduce stress concentration on the conductor part when the cable is bent and reduce probability of a breaking point on the conductor part, so that the conductor part is not prone to fracture due to bending.

A plurality of the reinforcing structures may surround a periphery of at least one of the sub-cables, preferably to form a protective layer. In particular, a plurality of the reinforcing structures may be arranged side by side, so that preferably a cross section of the protective layer along a direction perpendicular to an axis of the sub-cable forms an annular structure.

Each of the reinforcing structures may spirally wind (be wound) on at least one of the sub-cables along the extending direction of the sub-cable.

The sub-cables may (all) be located inside the annular structure formed by the protective layer or at least one of the sub-cables may be located inside the annular structure formed by the protective layer. Preferably, at least another of the sub-cables may located outside the protective layer.

The cable may further comprise an encapsulation layer that surrounds a periphery of the protective layer.

The cable may comprise a shielding layer that surrounds a periphery of at least one of the sub-cables; and/or the protective layer may surround a periphery of the shielding layer, and/or the shielding layer may be located inside the annular structure formed by the protective layer.

The shielding layer may comprise a shielding line and a reinforcing structure arranged along a circumferential direction of the shielding layer. Preferably, in the shielding layer, a ratio between numbers of the reinforcing structures and the shielding lines may range from 5% to 10%.

There may be at least two of the sub-cables, wherein the reinforcing structure may be located in a gap between the sub-cable and the shielding layer and/or the reinforcing structure may act as a first filling component, and/or the first filling component may be integrally twisted with the sub-cable.

The sub-cable further may comprise an insulating layer surrounding the conductor part. The conductor part may comprise a plurality of conductor lines.

The reinforcing structure may be arranged among a plurality of the conductor lines; or a plurality of the reinforcing structures may surround the periphery of the conductor part to form an inner protective layer, and the insulating layer may preferably surround a periphery of the inner protective layer.

A cross section of the metal part in a direction perpendicular to an extending direction of the metal part may have a circular structure, and/or a diameter dimension of the circular structure may range from 0.03 mm to 0.20 mm.

A cross section of the metal part perpendicular to an extending direction of the metal part may have a flat structure, and/or a width dimension of the flat structure may range from 0.1 mm to 1.0 mm, and/or a thickness dimension of the flat structure may range from 0.01 mm to 0.1 mm.

The metal part may be made of at least one of copper, aluminum, and stainless steel.

The fiber part may contain at least one of nylon fiber, PET fiber, aramid fiber, and PE fiber.

The conductor part may be one of a grounding wire conductor configured for grounding and a core wire conductor configured for transmitting electric energy and/or electric signals.

The cable may further comprise a further metal part which spirally extends along the extending direction of the fiber part and surrounds the periphery of the fiber part.

Winding directions of the metal part and the further metal part may be the same or opposite.

### Brief Description of the Drawings

- FIG. 1: is a schematic view of a cross-sectional structure of a cable of an embodiment of the present disclosure;
- FIG. 2: is a schematic structural view of a reinforcing structure of a metal part with a flat structure;
- FIG. 3: is another schematic structural view of a reinforcing structure of a metal part with a flat structure;
- FIG. 4: is a schematic structural view of a reinforcing structure of a metal part with a circular structure;
- FIG. 5: is another schematic structural view of a reinforcing structure of a metal part with a circular structure;
- FIG. 6: is a schematic structural view of a protective layer surrounding a sub-cable;
- FIG. 7: is another schematic view of a cross-sectional structure of a cable of an embodiment of the present disclosure;
- FIG. 8: is another schematic view of a cross-sectional structure of a cable of an embodiment of the present disclosure;
- FIG. 9: is another schematic view of a cross-sectional structure of a cable of an embodiment of the present disclosure;
- FIG. 10: is another schematic view of a cross-sectional structure of a cable of an embodiment of the present disclosure;
- FIG. 11: is a schematic structural view of a reinforcing structure provided inside a sub-cable;
- FIG. 12: is another schematic structural view of a reinforcing structure provided inside a sub-cable; and
- FIG. 13: is a schematic structural view of a charging data line of an embodiment of the present disclosure.

### Detailed Description

Technical solutions in embodiments of the present disclosure will be clearly and fully described with reference to the accompanying drawings in the embodiments of the present disclosure. Obviously, the embodiments to be described are merely part of embodiments of the disclosure, but not all embodiments of the disclosure. Based on the embodiments of the disclosure, all other embodiments obtained by those of ordinary skill in the art without inventive work shall fall within the scope of the disclosure.

The inventor found that electronic devices need cables to transmit current and electric signals through long-term research. For example, a cable in a data line of a mobile phone can be used for charging and data transmission for the mobile phone. Currently, the cables are often subjected to external forces such as pulling and bending during use, and thus are prone to fatigue fracture and cannot be used. In order to solve this technical problem, the disclosure provides following embodiments.

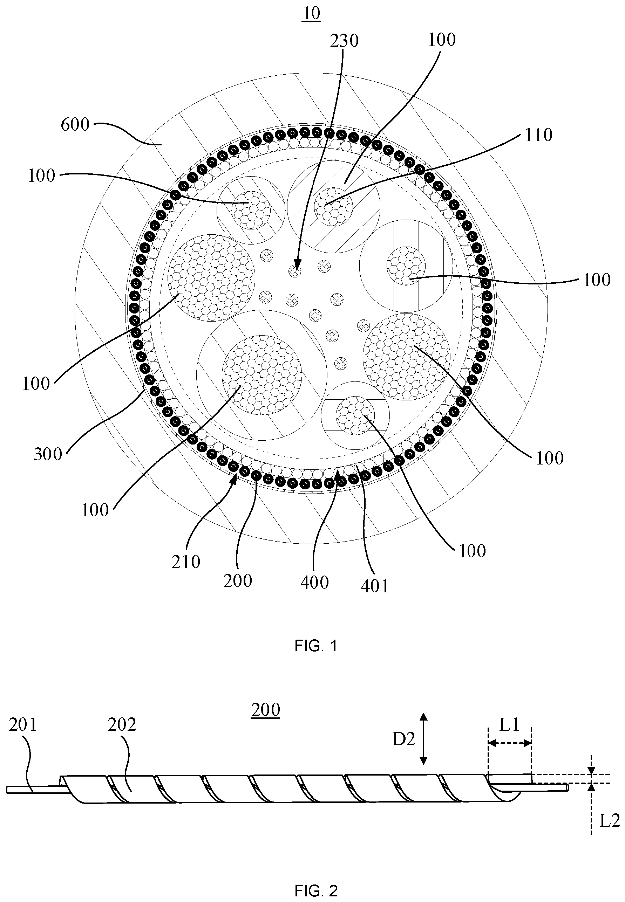

As shown in FIGS. 1 to 5, a cable 10 described in an embodiment of the present disclosure includes a sub-cable 100 and at least one reinforcing structure 200, and the sub-cable 100 has a conductive conductor part 110. The reinforcing structure 200 includes a fiber part 201 and at least one metal part 202. The fiber part 201 extends along an extending direction of the sub-cable 100, and the at least one metal part 202 spirally extends along the extending direction of the fiber part 201 and surrounds a periphery of the fiber part 201.

The cable 10 is often subjected to external forces such as pulling and bending during use, and thus the conductor part 110 inside the cable 10 is prone to fatigue fracture and cannot be used. By providing the reinforcing structure 200, a risk of fatigue fracture of the conductor part 110 can be reduced, and resistance to fatigue fracture of the cable 10 can be improved.

Specifically, the fiber part 201 has high tensile strength. By setting the fiber part 201 to extend along the extending direction of the sub-cable 100, the fiber part 201 can share a tensile stress on the conductor part 110 when the cable 10 is pulled or bent, and the tensile stress on the conductor part 110 is relatively small, which can increase the number of times that the conductor part 110 can be subjected to pulling and bending, and the conductor part 110 is not prone to tensile fracture. By setting the at least one metal part 202 to spirally extend along the extending direction of the fiber part 201, the metal part 202 can have a large deformation margin and is easily bent and deformed, is subjected to a small shearing force when bent, and has small resistance to bending of the cable 10, which is conducive to keeping the cable 10 flexible and easily bent. The metal part 202 can reduce stress concentration on the conductor part 110 when the cable 10 is bent, and reduce probability of a breaking point on the conductor part 110, so that the conductor part 110 not prone to fracture due to bending.

The metal part 202 spirally surrounds the periphery of the fiber part 201, which facilitates relative fixing of the metal part 202 and the fiber part, so that the reinforcing structure 200 is present as an integral structure, and it is convenient to add the reinforcing structure 200 in the cable 10 in a production process of the cable 10, thus improving production efficiency.

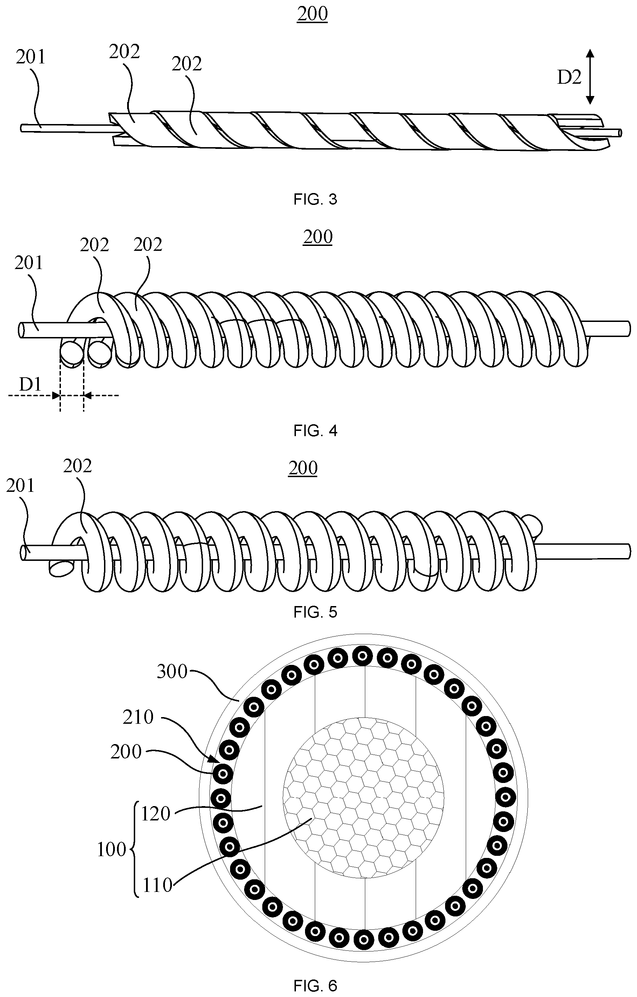

Optionally, as shown in FIGS. 3 and 4, two metal parts 202 spirally extend along the extending direction of the fiber part 201 and surround the periphery of the fiber part 201. Winding directions of the two metal parts 202 may be the same or opposite.

Optionally, the metal part 202 is made of copper, aluminum, stainless steel or other alloy materials.

Optionally, the fiber part 201 contains at least one of nylon fiber, PET fiber, aramid fiber and PE fiber.

Optionally, the conductor part 110 may be one of a grounding wire conductor and a core wire conductor. The ground wire conductor is used for grounding, and the core wire conductor is used for transmitting electric energy and electric signals.

Optionally, as shown in FIGS. 1 and 6, a plurality of the reinforcing structures 200 surround a periphery of at least one sub-cable 100 to form a protective layer 210. A plurality of the reinforcing structures 200 are arranged side by side, so that a cross section of the protective layer 210 along a direction perpendicular to an axis of the sub-cable 100 forms an annular structure.

By setting a plurality of the reinforcing structures 200 to surround a periphery of at least one sub-cable 100, a plurality of the reinforcing structures 200 can protect the sub-cable 100 inside the protective layer 210 in multiple directions, and the protective layer 210 can protect the sub-cable 100 when the sub-cable 100 is pulled or bent in different directions, thereby improving protective effect on the sub-cable 100 inside the protective layer 210 and reducing the risk of fatigue fracture of the conductor part 110.

Further, a plurality of the reinforcing structures 200 can be arranged along a circumferential direction of the sub-cable 100 by abutting against each other, which can improve arrangement density of the reinforcing structures 200 and improve the protective effect on the sub-cable 100.

Optionally, the protective layer 210 can surround a single sub-cable 100 or two or more sub-cables 100, and one protective layer 210 or at least two protective layers 210 can be provided within the cable 10. Different protective layers 210 may be provided independently of each other or nested with each other.

Optionally, each of the reinforcing structures 200 is wound on at least one sub-cable 100 along the extending direction of the sub-cable 100. Further, each of the reinforcing structures 200 spirally extends along the extending direction of the sub-cable 100 and is wound on the at least one sub-cable 100.

That is, the reinforcing structure 200 has a two-stage spiral structure, namely, with the metal part 202 spirally surrounding the periphery of the fiber part 201 along the extending direction of the fiber part 201, the metal part 202 and the fiber part 201 spirally extend along the extending direction of the sub-cable 100 and are wound on the sub-cable 100. Thus, the reinforcing structure 200 is initially fixed on the sub-cable 100 after being wound on the sub-cable 100, which prevents the reinforcing structure 200 from falling off the sub-cable 100 and facilitates improving stability of the production process of the cable 10.

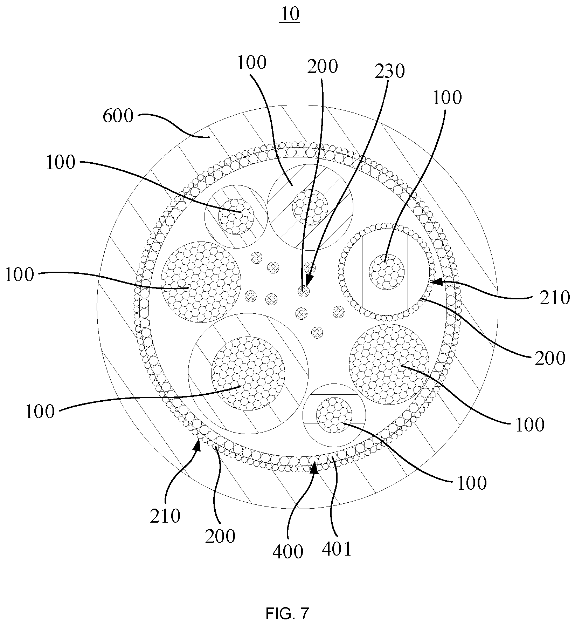

Optionally, as shown in FIGS. 1 and 7, the sub-cables 100 are all located inside the annular structure formed by the protective layer 210. That is, there is one protective layer 210 within the cable 10 surrounding all of the sub-cables 100 of the cable 10. In this way, the protective layer 210 can protect all of the sub-cables 100 of the cable 10, which facilitates improvement of overall protective effect on the cable 10.

For example, the cable 10 may include six or seven sub-cables 100, all of which are located inside the annular structure formed by the protective layer 210.

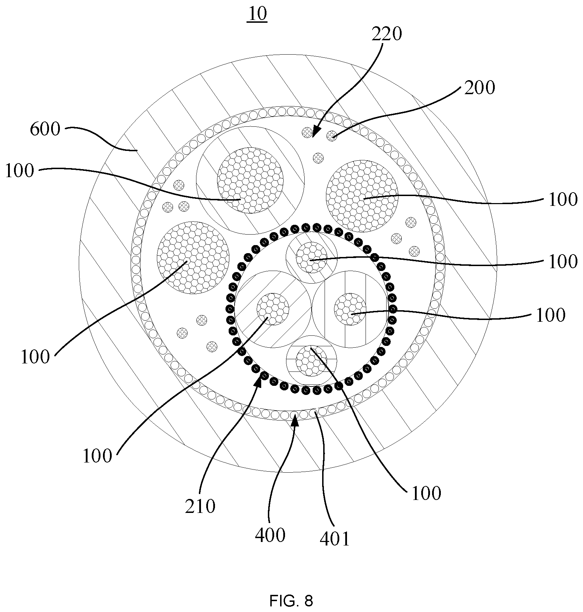

Optionally, as shown in FIGS. 8 to 10, at least one of the sub-cables 100 is located inside the annular structure formed by the protective layer 210, and at least another of the sub-cables is located outside the protective layer 210. That is to say, there is one protective layer 210 in the cable 10 surrounding part of the sub-cables 100 of the cable 10. In this way, the protective layer 210 can strengthen protection on fragile sub-cables 100.

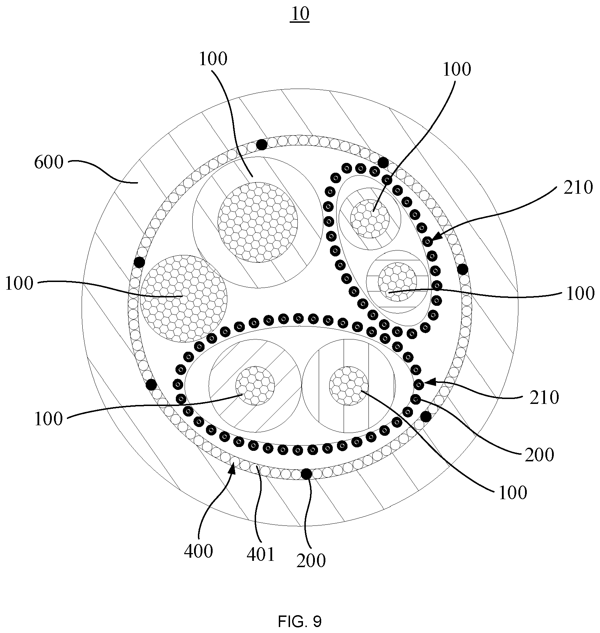

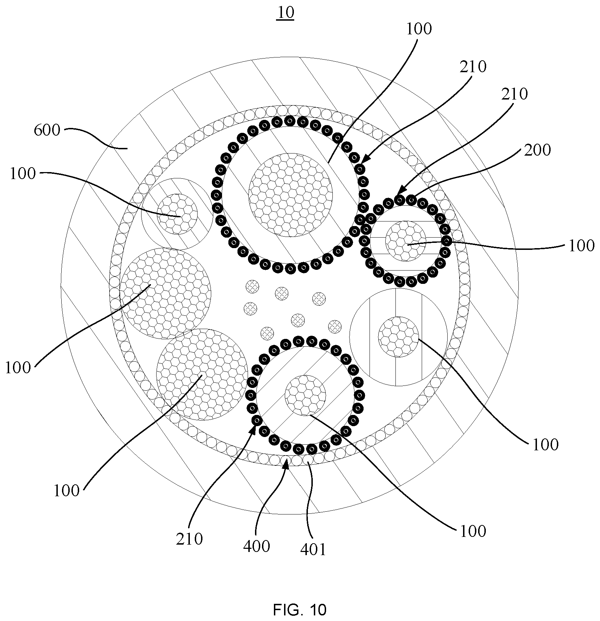

For example, as shown in FIG. 8, the cable 10 may include seven sub-cables 100 and one protective layer 210, with four sub-cables 100 located inside the annular structure formed by the protective layer 210 and three sub-cables 100 located outside the protective layer 210. As another example, as shown in FIG. 9, the cable 10 may include six sub-cables 100 and two protective layers 210, with two sub-cables 100 provided inside an annular structure formed by each of the two protective layers 210 and the remaining two sub-cables 100 located outside the two protective layers 210. As another example, as shown in FIG. 10, the cable 10 may include seven sub-cables 100 and three protective layers 210, with three sub-cables 100 respectively located inside the annular structures formed by the three protective layers 210 and the remaining four sub-cables 100 located outside the protective layers 210.

In some embodiments, the cable 10 may include at least two protective layers 210, and inside an annular structure formed by one of the at least two protective layers 210, all sub-cables 100 and the remaining protective layers 210 are provided, and at least one sub-cable 100 is provided inside each of annular structures formed by the remaining protective layers 210 respectively. For example, as shown in FIG. 7, the cable 10 may include seven sub-cables 100 and two protective layers 210. One sub-cable 100 is provided inside an annular structure formed by one of the two protective layers 210, and both the seven sub-cables 100 and one of the two protective layers 210 are located inside an annular structure formed by the other of the two protective layers 210.

Optionally, as shown in FIGS. 1 and 6, the cable 10 further includes an encapsulation layer 300 which surrounds a periphery of the protective layer 210. By providing the encapsulation layer 300, the protective layer 210 can be stably fixed on the periphery of the sub-cable 100, which facilitates improvement of the stability of the production process. For example, the protective layer 210 may be a film band or an injection molded plastic layer. Further, the encapsulation layer 300 may have an insulating function.

Further, the cable 10 may include at least two protective layers 210 and one encapsulation layer 300 which surrounds a periphery of one of the at least two protective layers 210. Or, the encapsulation layers 300 and the protective layers 210 are the same in number and are in one-to-one correspondence, and each of the encapsulation layers 300 surrounds a periphery of the corresponding protective layer 210.

Optionally, as shown in FIG. 1, the cable 10 includes a shielding layer 400, and the shielding layer 400 surrounds a periphery of at least one sub-cable 100. The protective layer 210 surrounds a periphery of the shielding layer 400.

The shielding layer 400 can reflect and absorb electromagnetic radiation, and can restrict interference signals from entering the shielding layer 400, so as to reduce signal transmission loss of the sub-cable 100 inside the shielding layer 400. The shielding layer 400 can also protect the sub-cable 100 and reduce a risk of fatigue fracture of the sub-cable 100.

Optionally, the shielding layer 400 is located inside the annular structure formed by the protective layer 210. In some embodiments, the shielding layer 400 surrounds a periphery of a single sub-cable 100 to restrict mutual interference between the sub-cables 100. In some embodiments, the shielding layer 400 surrounds peripheries of all sub-cables 100 to restrict interference of external signals to the sub-cables 100.

Optionally, the cable 10 includes two or more shielding layers 400.

Optionally, as shown in FIG. 9, the shielding layer 400 includes a shielding line 401 and a reinforcing structure 200 arranged along a circumferential direction of the shielding layer 400. In the shielding layer 400, a ratio between numbers of the reinforcing structures 200 and the shielding lines 401 ranges from 5% to 10%.

The shielding line 401 is made of a metal material or a plastic material with a metal coating. The shielding line 401 may extend along the extending direction of the cable 10 or the sub-cable 100. The shielding lines 401 abut against each other along the circumferential direction of the shielding layer 400 to realize dense arrangement, which can enhance shielding effect on interference signals. Providing the reinforcing structure 200 in the shielding layer 400 facilitates improving the protective effect on the sub-cable 100.

Because the metal part 202 extends spirally, the reinforcing structure 200 itself has many gaps, and shielding effect of the reinforcing structure 200 is weaker than that of the shielding line 401. Therefore, the number of the reinforcing structures 200 in the shielding layer 400 should not be too large, and the ratio between the numbers of the reinforcing structures 200 and the shielding lines 401 should not exceed 10%. The number of the reinforcing structures 200 in the shielding layer 400 that is too small may affect the protective effect, and thus the ratio between the numbers of the reinforcing structures 200 and the shielding lines 401 should not be less than 5%.

For example, in the shielding layer 400, the ratio between the numbers of the reinforcing structures 200 and the shielding lines 401 ranges from 2% to 5%.

Optionally, as shown in FIG. 8, there are at least two sub-cables 100, the reinforcing structure 200 is located in a gap between the sub-cable 100 and the shielding layer 400 and acts as a first filling component 220, and the first filling component 220 is integrally twisted with the sub-cable 100.

A diameter of the sub-cable 100 may be larger than that of the reinforcing structure 200. Different sub-cables 100 may be integrally twisted, and there is a gap between the twisted sub-cables 100 and the shielding layer 400. The reinforcing structure 200 is provided at the gap and twisted with the sub-cables 100, and thus can protect the sub-cables 100, which facilitates improvement of space utilization inside the cable 10.

Optionally, the first filling component 220 and the sub-cables 100 can also be twisted with a filling material (such as fiber and soft cotton thread) together in the cable 10 to reduce the risk of fatigue fracture of the conductor part 110.

Optionally, as shown in FIGS. 1 and 7, there are at least three sub-cables 100, the reinforcing structures 200 are scattered among the sub-cables 100 as a second filling component 230, and the second filling component 230 is integrally twisted with the sub-cables 100.

A diameter of the sub-cable 100 may be larger than that of the reinforcing structure 200. Different sub-cables 100 can be integrally twisted, and there is a gap between the twisted sub-cables 100. By providing the reinforcing structures 200 at the gap to be twisted with the sub-cables 100, the reinforcing structures 200 can protect the sub-cables 100, which facilitates improvement of space utilization inside the cable 10.

Optionally, as shown in FIGS. 1 and 7, at least three sub-cables 100 spirally extend along the extending direction of the cable 10 to form a spiral core structure (not labeled). At least three sub-cables 100 are arranged in order along a direction perpendicular to the extending direction of the cable 10, so that a cross section of the core structure in the direction perpendicular to the extending direction of the cable 10 is annular. The reinforcing structures 200 are scattered among the sub-cables 100 in the core structure.

Specifically, at least three sub-cables 100 spirally extend along the extending direction of the cable 10 in a twisting manner to form a spiral core structure. By arranging the at least three sub-cables 100 in sequence along the direction perpendicular to the extending direction of the cable 10, there may be enough deformation space between the different sub-cables 100, which facilitates twisting of the different sub-cables 100.

Optionally, in the cable 10, the second filling component 230 and the sub-cables 100 can also be twisted together with a filling material (such as fiber and soft cotton thread) to reduce the risk of fatigue fracture of the conductor part 110.

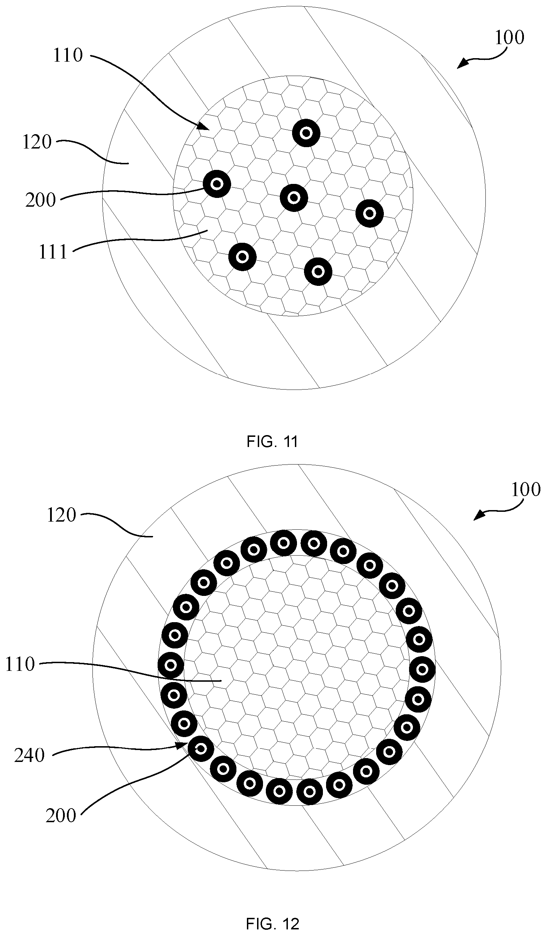

Optionally, as shown in FIG. 11, the sub-cable 100 further includes an insulating layer 120 surrounding the conductor part 110. The conductor part 110 includes a plurality of conductor lines 111. The reinforcing structure 200 is arranged among a plurality of the conductor lines 111. By providing the insulating layer 120, short-circuit contact of different sub-cables 100 can be prevented. The insulating layer 120 can also protect the sub-cable 100 and reduce the risk of fatigue fracture of the sub-cable 100.

The conductor lines 111 are often subjected to external forces such as pulling and bending during use, and thus are prone to fatigue fracture and cannot be used. By providing the reinforcing structure 200 inside the sub-cable 100, a risk of fatigue fracture of the conductor line 111 can be reduced and fatigue fracture resistance of the conductor line 111 can be improved.

Specifically, the fiber part 201 of the reinforcing structure 200 has high tensile strength, and can share a tensile stress on the conductor line 111 when the conductor line 111 is pulled or bent, and the tensile stress on the conductor line 111 is small, so that the number of times that the conductor line 111 can be subjected to pulling and bending can be increased, and the conductor line 111 is not prone to tensile fracture. In addition, the metal part 202 of the reinforcing structure 200 has a large deformation margin, is easily bent and deformed, and is subjected to a small shearing force when bent. When the conductor line 111 is bent, the metal part 202 can reduce occurrence of stress concentration on the conductor line 111, reduce probability of a breaking point on the conductor line 111, and make the conductor line 111 not prone to fracture due to bending.

Optionally, as shown in FIG. 12, a plurality of the reinforcing structures 200 surround the periphery of the conductor part 110 to form an inner protective layer 240, and the insulating layer 120 surrounds a periphery of the inner protective layer 240.

By setting a plurality of the reinforcing structures 200 to surround the periphery of the conductor part 110, a plurality of the reinforcing structures 200 can protect the conductor part 110 inside the inner protective layer 240 in multiple directions, and can protect the conductor part 110 when the conductor part 110 is pulled or bent in different directions, thereby improving protective effect on the conductor part 110 and reducing the risk of fatigue fracture of the conductor part 110.

Further, a plurality of the reinforcing structures 200 may be arranged by abutting against each other along a circumferential direction of the conductor part 110, which can improve arrangement density of the reinforcing structures 200 and improve the protective effect on the conductor part 110.

Optionally, there are a plurality of sub-cables 100. An insulating layer 120 is provided at a periphery of a conductor part 110 of at least one of the sub-cables 100, and an insulating layer 120 is not provided at a periphery of a conductor part 110 of at least another of the sub-cables 100.

In some other embodiments, the conductor part 110 is a single copper wire or a single copper wire with a plating, such as a tin-plated copper wire and a silver-plated copper wire.

Optionally, the conductor line 111 is a fine copper wire or a fine copper wire with a plating, such as a tin-plated copper wire and a silver-plated copper wire.

Optionally, in the sub-cable 100, a ratio between numbers of the reinforcing structures 200 and the conductor lines 111 ranges from 1% to 10%.

The metal part 202 extends spirally, has a large bending degree, and has an ability to transmit current or electric signals weaker than that of the conductor line 111. Therefore, the number of reinforcing structures 200 added in the sub-cable 100 should not be too large, and the ratio between the numbers of the reinforcing structures 200 and the conductor lines 111 should not exceed 10%. The number of the reinforcing structures 200 in the sub-cable 100 that is too small may affect the protective effect, and thus the ratio between the numbers of the reinforcing structures 200 and the conductor lines 111 should not be less than 1%.

For example, in the sub-cable 100, the ratio between the numbers of reinforcing structures 200 and conductor lines 111 is from 2% to 5%.

Optionally, in the sub-cable 100, the reinforcing structure 200 and the conductor line 111 can also be twisted with a filling material (such as nylon fiber) together to reduce the risk of fatigue fracture of the conductor part 110.

Optionally, as shown in FIG. 4, a cross section of the metal part 202 in a direction perpendicular to an extending direction of the metal part 202 has a circular structure, and a diameter dimension D1 of the circular structure ranges from 0.03 mm to 0.20 mm.

Further, the diameter dimension D1 of the circular structure ranges from 0.05 mm to 0.15 mm. For example, the diameter dimension D1 of the circular structure is 0.06 mm or 0.10 mm.

Thus, not only the metal part 202 has sufficient mechanical strength, but also the reinforcing structure 200 has a small radial dimension and does not occupy too much space in the sub-cable 100.

Optionally, as shown in FIG. 2, a cross section of the metal part 202 perpendicular to the extending direction of the metal part 202 has a flat structure, a width dimension L1 of the flat structure ranges from 0.1 mm to 1.0 mm, and a thickness dimension L2 of the flat structure ranges from 0.01 mm to 0.1 mm. For example, the width dimension L1 of the flat structure is 0.2 mm or 0.6 mm, and the thickness dimension L2 of the flat structure is 0.02 mm, 0.05 mm or 0.07 mm. Further, a thickness direction D2 of the flat structure is perpendicular to the extending direction of the fiber part 201.

The width dimension L1 of the flat structure is larger than the thickness dimension L2 of the flat structure. The large width dimension L1 of the flat structure makes the metal part 202 have sufficient mechanical strength, and the small thickness dimension L2 of the flat structure makes the reinforcing structure 200 have a small radial dimension and not occupy too much space in the sub-cable 100. For example, the flat structure is rectangular.

Optionally, as shown in FIG. 1, a surface of the cable 10 is provided with a skin layer 600, and the skin layer 600 can have functions of insulation and mechanical protection and can reduce the risk of fatigue fracture of the sub-cable 100.

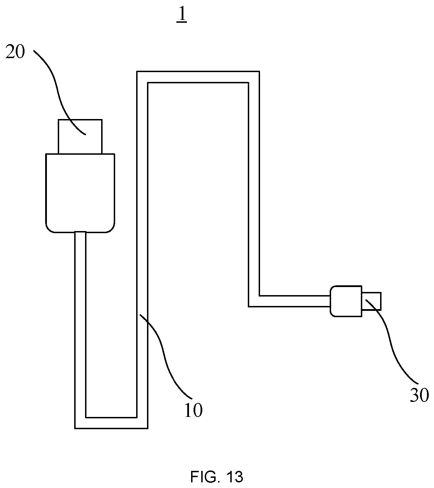

As shown in FIG. 13, a charging data line 1 described in an embodiment of the present disclosure includes the cable 10. Specifically, the charging data line 1 includes a first connector 20, a second connector 30 and the cable 10. The cable 10 is connected between the first connector 20 and the second connector 30. The first connector 20 and the second connector 30 may be connected through the cable 10. For example, the cable 10 may be connected to a power supply and a computer through the first connector 20. The cable 10 may be connected to a device such as a cell phone and an earphone through the second connector 30.

Optionally, the first connector 20 is a USB interface. For example, the first connector 20 is a standard type-A interface, a mini type-A interface, a micro type-A interface, a standard type-B interface, a mini type-B interface, a micro type-B interface, or a type-C interface.

Optionally, the second connector 30 is a micro USB interface or a type-C interface or a lighting interface.

To sum up, the embodiments can reduce the risk of fatigue fracture of the conductor part 110 and improve the fatigue fracture resistance of the cable 10. The fiber part 201 has high tensile strength and can share the tensile stress on the conductor part 110 when the cable 10 is pulled or bent, and the tensile stress on the conductor part 110 is small, which can increase the number of times that the conductor part 110 can be subjected to pulling and bending and makes the conductor part 110 not prone to tensile fracture. The metal part 202 has a large deformation margin, is easily bent and deformed, and is subjected to a small shearing force when bent, which can reduce stress concentration on the conductor part 110 when the cable 10 is bent and reduce probability of a breaking point on the conductor part 110, so that the conductor part 110 not prone to fracture due to bending.

The above are only preferred embodiments of the present disclosure and do not limit the scope of the disclosure. Transformation of an equivalent structure or process made with the contents of the description and drawings of the present disclosure is directly or indirectly used in other related technical fields and should be included in the protection scope of the present disclosure.

## Claims

1. A cable (10) comprising:
- sub-cables (100) comprising a conductive conductor part (110); and
- at least one reinforcing structure (200) comprising a fiber part (201) that extends along an extending direction of the sub-cable (100) and at least one metal part (202) that spirally extends along an extending direction of the fiber part (201) and surrounds a periphery of the fiber part (201).

2. The cable (10) of claim 1, wherein
- a plurality of the reinforcing structures (200) surround a periphery of at least one of the sub-cables (100) to form a protective layer (210), wherein a plurality of the reinforcing structures (200) are arranged side by side, so that a cross section of the protective layer (210) along a direction perpendicular to an axis of the sub-cable (100) forms an annular structure.

3. The cable (10) of claim 2, wherein
- each of the reinforcing structures (200) spirally winds on at least one of the sub-cables (100) along the extending direction of the sub-cable (100).

4. The cable (10) of claim 2 or 3, wherein
- the sub-cables (100) are all located inside the annular structure formed by the protective layer (210); or at least one of the sub-cables (100) is located inside the annular structure formed by the protective layer (210), and at least another of the sub-cables (100) is located outside the protective layer (210); and
- the cable (10) further comprises an encapsulation layer (300) that surrounds a periphery of the protective layer (210).

5. The cable (10) of claim 2 or 3, wherein
- the cable (10) comprises a shielding layer (400) that surrounds a periphery of at least one of the sub-cables (100); and
- the protective layer (210) surrounds a periphery of the shielding layer (400), or the shielding layer (400) is located inside the annular structure formed by the protective layer (210).

6. The cable (10) of claim 5, wherein
- the shielding layer (400) comprises a shielding line (401) and a reinforcing structure (200) arranged along a circumferential direction of the shielding layer (400); in the shielding layer (400), a ratio between numbers of the reinforcing structures (200) and the shielding line (401) ranges from 5% to 10%.

7. The cable (10) of claim 5 or 6, wherein
- there are at least two of the sub-cables (100), the reinforcing structure (200) is located in a gap between the sub-cable (100) and the shielding layer (400) and acts as a first filling component (220), and the first filling component (220) is integrally twisted with the sub-cable (100).

8. The cable (10) of any one of the preceding claims, wherein
- the sub-cable (100) further comprises an insulating layer (120) surrounding the conductor part (110); the conductor part (110) comprises a plurality of conductor lines (111); and
- the reinforcing structure (200) is arranged among a plurality of the conductor lines (111); or a plurality of the reinforcing structures (200) surround the periphery of the conductor part (110) to form an inner protective layer (240), and the insulating layer (120) surrounds a periphery of the inner protective layer (240).

9. The cable (10) of any one of the preceding claims, wherein
- a cross section of the metal part (202) in a direction perpendicular to an extending direction of the metal part (202) has a circular structure, and a diameter dimension of the circular structure ranges from 0.03 mm to 0.20 mm; or
- a cross section of the metal part perpendicular to an extending direction of the metal part (202) has a flat structure, a width dimension of the flat structure ranges from 0.1 mm to 1.0 mm, and a thickness dimension of the flat structure ranges from 0.01 mm to 0.1 mm.

10. The cable (10) of any one of the preceding claims, wherein the metal part (202) is made of at least one of copper, aluminum, and stainless steel.

11. The cable (10) of any one of the preceding claims, wherein the fiber part (201) contains at least one of nylon fiber, PET fiber, aramid fiber, and PE fiber.

12. The cable (10) of any one of the preceding claims, wherein the conductor part (110) is one of a grounding wire conductor configured for grounding and a core wire conductor configured for transmitting electric energy and/or electric signals.

13. The cable (10) of any one of the preceding claims, further comprising a further metal part which spirally extends along the extending direction of the fiber part (201) and surrounds the periphery of the fiber part (201).

14. The cable (10) of claim 13, wherein winding directions of the metal part (202) and the further metal part are the same or opposite.

15. A charging data line comprising:
- the cable (10) of any one of the preceding claims.
